Europäisches Patentamt

European Patent Office

Office européen des brevets

(19)

(11) Numéro de publication : **0 077 695 B1**

(12) FASCICULE DE BREVET EUROPÉEN

(45) Date de publication du fascicule du brevet :
22.01.86

(51) Int. Cl.⁴ : **F 16 B 37/04**

(21) Numéro de dépôt : 82401390.8

(22) Date de dépôt : 27.07.82

(54) **Dispositif de fixation à écrou retenu.**

(30) Priorité : 16.10.81 FR 8119514

(43) Date de publication de la demande :
27.04.83 Bulletin 83/17

(45) Mention de la délivrance du brevet :
22.01.86 Bulletin 86/04

(84) Etats contractants désignés :
AT BE CH DE GB IT LI LU NL SE

(56) Documents cités :
FR-A- 2 135 463
US-A- 2 266 832
US-A- 2 303 148

(73) Titulaire : **RAPID S.A.**
**251 Boulevard Péreire**
**F-75852 Paris Cedex 17 (FR)**

(72) Inventeur : **Dubost, Dominique**
**53, Résidence Elysée II**
**F-78170 La Celle Saint Cloud (FR)**

(74) Mandataire : **Durand, Yves Armand Louis et al**
**Cabinet Z. Weinstein 20, Avenue de Friedland**
**F-75008 Paris (FR)**

Jouve, 18, rue St-Denis, 75001 Paris, France

## Description

La présente invention a essentiellement pour objet un dispositif de fixation à écrou retenu et du type comprenant essentiellement un écrou solidaire d'un support qui peut être fixé dans l'orifice d'un panneau quelconque, tel que par exemple une tôle.

On a déjà proposé sur le marché des dispositifs du type ci-dessus, c'est-à-dire, comprenant un support sur lequel est monté de manière mobile un écrou qui, une fois mis en place dans l'orifice du panneau grâce au support, peut se débattre dans celui-ci sous l'effet du vissage pour finalement prendre appui contre la tôle sur laquelle il est serré.

C'est ainsi qu'on connaît déjà des écrous qui sont montés de manière flottante et coulissante dans un support en forme de cage qui enveloppe l'écrou et qui peut être retenue dans l'orifice d'un panneau après lui avoir fait subir une rotation d'un quart de tour par exemple (FR-A-2 135 463).

Toutefois, ce genre de dispositif antérieur présentait un certain nombre d'inconvénients. En effet, l'écrou devait faire saillie de la cage qui le reçoit, et on ne pouvait pas utiliser des écrous traditionnels de forme carrée ou rectangulaire. De plus, la forme spéciale de l'écrou exigeait l'usinage d'un orifice de forme correspondante et particulière dans la tôle. Il faut également dire que, du fait de la configuration particulière de l'ensemble cage plus écrou, ce dernier ne présentait pas une surface d'appui maximum sur la tôle après serrage. Enfin, l'écrou avait tendance à se débattre intempestivement dans son support ou sa cage, ce qui représentait un inconvénient lorsqu'il convenait de monter l'écrou dans l'orifice d'une tôle, par le dessous de cette tôle.

La présente invention a pour but de remédier notamment aux inconvénients de tous les dispositifs antérieurs en proposant un nouveau dispositif à écrou retenu qui est d'un emploi très sûr et peu coûteux et dont l'assemblage support-écrou est réalisable immédiatement par n'importe qui et sans aucune complication particulière. En outre, le dispositif selon l'invention présente l'avantage de pouvoir utiliser des écrous d'un type classique et de pouvoir utiliser toute la surface de l'écrou pour lui faire jouer le rôle de surface portante, ce qui bien sûr accroît considérablement la sûreté et la rigidité de l'assemblage réalisé avec cet écrou.

A cet effet, l'invention a pour objet un dispositif de fixation à écrou retenu, du type constitué par un écrou monté de manière coulissante sur un support qui peut être fixé dans l'orifice d'un panneau ou analogue, tel que par exemple une tôle, pour permettre la retenue de l'écrou sur ce panneau, caractérisé en ce que ledit support comporte au moins deux branches traversant de part en part le corps d'écrou en passant dans des orifices, rainures ou analogues pratiqués dans ce corps d'écrou suivant sensiblement son axe.

Suivant une autre caractéristique de ce dispositif, les deux branches précitées du support passent respectivement dans deux rainures diamétralement opposées et ménagées dans la périphérie de l'orifice taraudé de l'écrou où elles débouchent.

On comprend donc déjà que le support qui retient l'écrou n'empiète pas sur la surface portante de celui-ci et qui, ainsi, demeure maximale.

Suivant un mode de réalisation préféré, les deux branches précitées traversant l'écrou constituent les branches d'un support présentant la forme générale d'un U réalisé en un matériau filiforme, tel que par exemple fil d'acier, l'extrémité libre des deux branches étant retournée vers l'extérieur pour permettre l'accrochage du support dans l'orifice du panneau, tandis que l'autre extrémité des deux branches est réunie de façon à réaliser une partie immédiatement insérable dans l'orifice taraudé de l'écrou, de sorte que, en raison de l'élasticité du support, les branches précitées puissent se placer instantanément et respectivement dans les rainures de l'écrou.

On notera encore ici que les deux branches du U du support sont au moins en partie déformées vers l'extérieur du U pour retenir l'écrou sur le support tout en lui permettant de coulisser sur ce dernier.

Suivant un autre mode de réalisation de l'invention, les deux branches précitées constituent les branches d'un U dont les extrémités libres sont solidaires d'une plaquette ou analogue qui peut être fixée dans l'orifice du panneau et qui forme avec le U des branches le support précité.

Dans ce mode de réalisation, les branches du support comportent un épaulement pour la retenue de l'écrou.

Suivant une autre caractéristique, entre l'épaulement et la plaquette du support, les branches précitées sont constituées par une partie sensiblement rectiligne à laquelle fait suite une partie formant rampe.

Ainsi, lors du vissage de l'écrou, celui-ci pourra coulisser sur les branches qui s'infléchiront vers l'axe de l'écrou de façon à permettre un auto-freinage.

Suivant encore une autre caractéristique de l'invention, la plaquette du support est munie, de part et d'autre des branches précitées, de butées jouant un double rôle et à savoir le blocage en rotation de l'écrou et le maintien du support dans l'orifice du panneau.

Ces butées sont de préférence constituées par deux paires de plots ou analogues comportant respectivement des parois formant rampes qui permettent avantageusement le clippage du support dans l'orifice du panneau.

Selon encore une autre caractéristique, l'écrou et la plaquette du support sont sensiblement rectangulaires et sont orientés de façon que leurs directions longitudinales respectives soient orthogonales.

Comme on le verra ultérieurement, cet agencement particulier permet le montage de l'écrou dans l'orifice d'un panneau après avoir fait effectuer au support un quart de tour.

Suivant une autre caractéristique de l'invention, les branches de support, tant en ce qui concerne le premier mode de réalisation que le deuxième, sont réunies par une partie en forme d'anse effilée permettant l'introduction du support dans l'orifice taraudé de l'écrou.

L'invention vise également un assemblage par vis et écrou utilisant un dispositif répondant aux caractéristiques sus-mentionnées.

D'autres avantages et caractéristiques de l'invention apparaîtront mieux dans la description détaillée qui suit et se réfère aux dessins annexés donnés uniquement à titre d'exemple et dans lesquels :

La figure 1 est une vue en perspective d'un mode de réalisation de dispositif à écrou retenu conforme à l'invention, et fonctionnant suivant le principe quart de tour, comme on l'expliquera ultérieurement.

La figure 2 est une vue en élévation de ce dispositif en cours de montage dans l'orifice d'un panneau, avant que l'on fait subir au support un quart de tour.

La figure 3 est une vue en coupe longitudinale passant par l'axe de l'écrou, et montre le dispositif en position monté après avoir fait subir au support une rotation d'un quart de tour.

La figure 4 est une vue en coupe faite suivant la ligne IV-IV de la figure 3.

La figure 5 est une vue en coupe longitudinale montrant un assemblage réalisé avec le dispositif des figures 1 à 4.

La figure 6 est une vue en perspective d'un autre mode de réalisation du dispositif selon l'invention, avant montage, sur le panneau.

La figure 7 est une vue en perspective de dessous de ce dispositif après montage, et

La figure 8 est une vue en perspective et de dessus de ce dispositif prêt à réaliser un assemblage.

On se reportera tout d'abord aux figures 6 à 8 pour décrire un premier mode de réalisation de dispositif à écrou retenu conforme aux principes de l'invention.

Comme on le voit bien sur les figures 6 et 7, ce dispositif comprend essentiellement un écrou 1 qui est carré suivant l'exemple illustré, et dans lequel sont pratiquées deux rainures 2 permettant le montage d'un support 3 de l'écrou 1. Ce support 3 présente la forme générale d'un U dont les branches 4 sont respectivement logées dans les deux rainures 2 qui, suivant une réalisation préférée, sont diamétralement opposées et ménagées dans la périphérie de l'orifice taraudé 5 de l'écrou 1 où elles débouchent.

L'extrémité libre 6 des deux branches 4 du support 3 est retournée vers l'extérieur pour permettre l'accrochage du support 3 dans l'orifice 7 d'un panneau P. Les branches 4 sont réunies par une partie 8 en forme d'anse effilée permettant l'introduction du support 3 dans l'orifice taraudé 5 de l'écrou 1. A cet effet, les branches 4, comme on le voit bien sur les figures 6 à 8, sont, par leurs parties 4a, déformées vers l'extérieur du U pour retenir l'écrou 1 sur son support 3, et, sont par leurs parties 4b, déformées vers l'intérieur du U pour conférer à la partie 8 du support 3 la forme effilée représentée et permettant son introduction aisée dans l'orifice taraudé 5. On a montré en 9 sur les dessins le raccordement en angle obtus des parties déformées 4a et 4b des branches 4 du support 3.

Ce dernier est réalisé en un matériau filiforme, tel que par exemple fil d'acier, ce qui confère au support une certaine élasticité qui permet notamment son montage dans l'écrou 1. Ainsi, lors de l'introduction du support 3 par son extrémité 8 dans l'orifice taraudé 5 de l'écrou 1, les branches élastiques 4 se rapprocheront en coulissant dans les rainures axiales 2 qui constituent l'une des caractéristiques essentielles de la présente invention. L'écrou 1 coulisse le long des branches 4 jusqu'à ce que sa face supérieure 1a bute contre les extrémités retournées 6 du support 3, et à ce stade, comme on le voit sur la figure 6, l'écrou 1 et son support 3 constituent un ensemble prêt à être monté dans l'orifice 7 du panneau P.

A cet effet, l'élasticité du support 3 permet un rapprochement des branches élastiques 4 pour accrocher les extrémités 6 de ces branches dans l'orifice 7 pour finalement obtenir le montage visible sur la figure 8, les extrémités 6 des branches 4 se plaçant instantanément dans les angles opposés de l'orifice 7. L'écrou 1 étant ainsi solidaire du panneau P, on peut fixer sur ce panneau une pièce quelconque, telle que P$_1$, au moyen d'une vis 10, comme on le voit bien sur la figure 8.

Le dispositif à écrou retenu qui vient d'être décrit est très facilement démontable et on insistera ici sur le fait que l'écrou 1 présente une surface 1a d'appui ou de portée sur le panneau P qui est maximum en raison du fait que le support 3 est monté à l'intérieur du corps d'écrou, ce qui n'était pas le cas des dispositifs antérieurs qui utilisaient comme support d'écrou une cage enveloppant l'écrou. En outre, un tel dispositif autorise l'utilisation d'écrous de forme classique et dans lesquels on aura, selon l'invention, usiné des rainures axiales 2, ce qui confère à l'ensemble du dispositif un coût minimal.

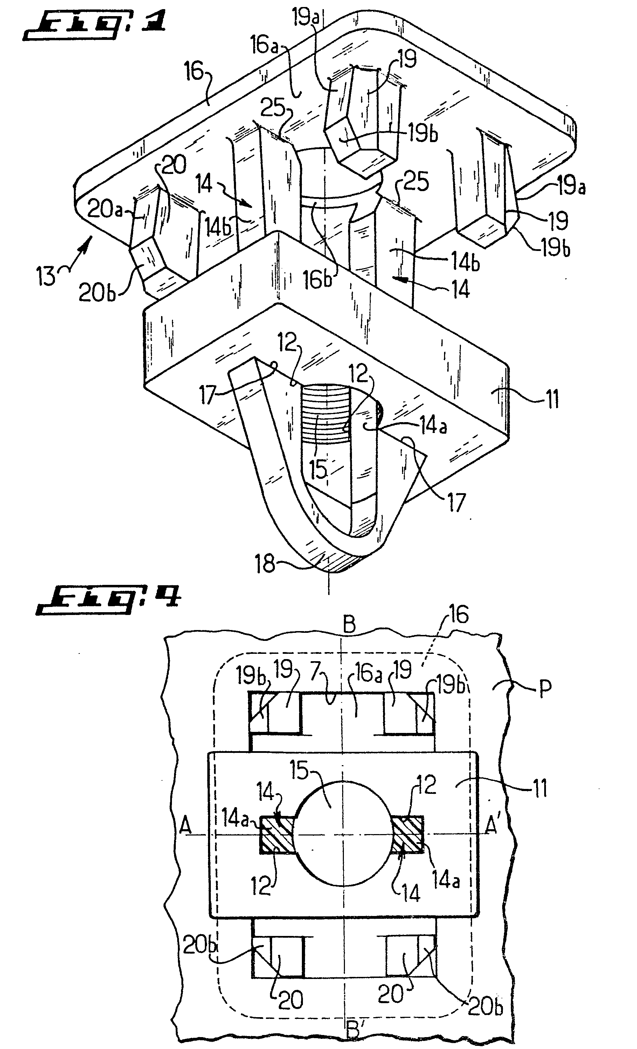

Les caractéristiques et avantages ci-dessus se retrouvent dans le mode de réalisation illustré par les figures 1 à 5 qui montrent un dispositif à écrou retenu du type à montage quart de tour et que l'on décrira en détail ci-après.

Comme dans le mode de réalisation précédent, le dispositif représenté sur ces figures comprend essentiellement un écrou 11 associé à un support 13 comportant deux branches 14 traversant de part en part le corps d'écrou 11 en passant respectivement dans deux rainures 12 pratiquées dans le corps d'écrou suivant sensiblement son axe. Ces rainures 12 sont, comme dans le mode de réalisation précédent, diamétralement opposées et ménagées de manière débouchante dans la périphérie de l'orifice taraudé 15 de l'écrou 11.

Les branches 14 constituent les branches d'un U dont les extrémités libres sont solidaires en d'une plaquette ou analogue 16 qui forme avec le U des branches 14 le support 13.

Les branches 14 le long desquelles peut coulisser l'écrou 11, comportent chacune un épaulement 17 permettant la retenue de l'écrou 11.

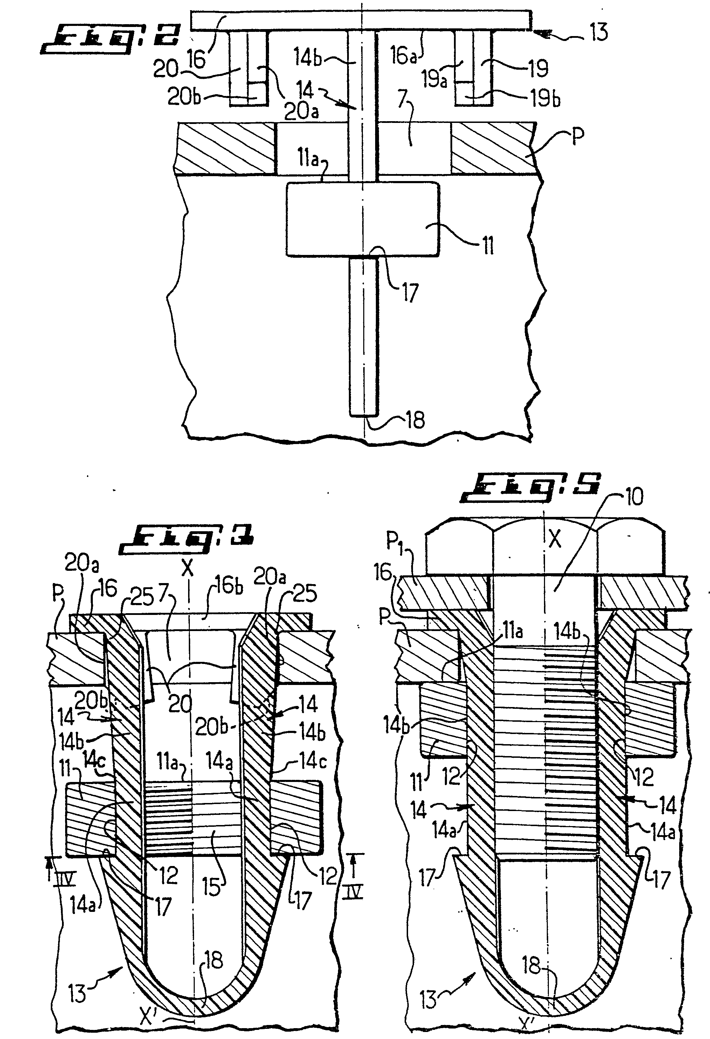

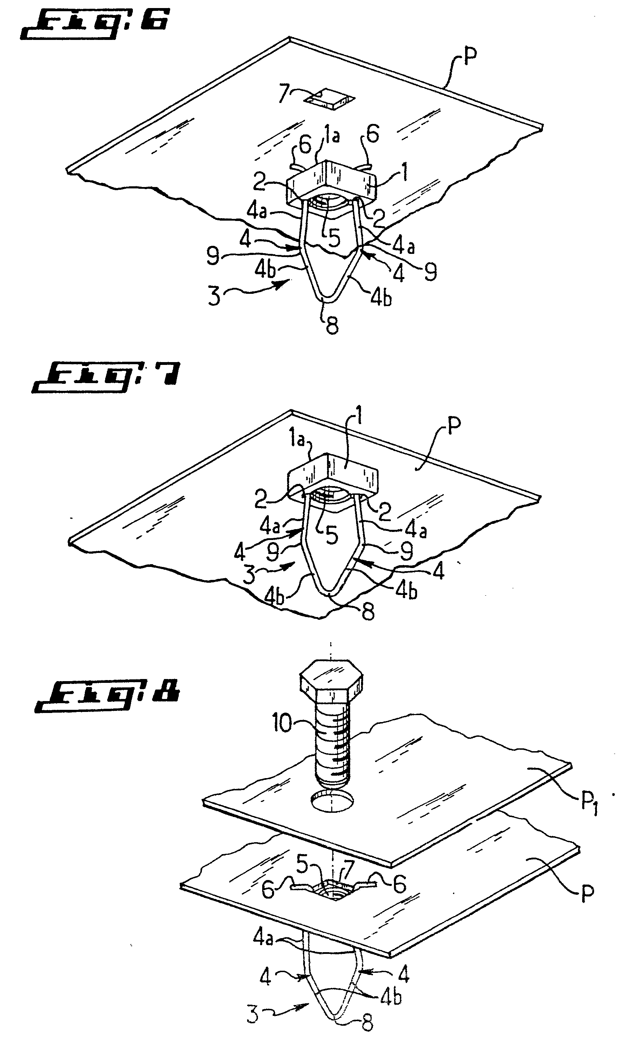

Comme on le voit bien sur la figure 3, entre l'épaulement 17 et la plaquette ou embase 16, chaque branche 14 est constituée par une partie sensiblement rectiligne ou d'épaisseur constante 14a, à laquelle fait suite une partie formant rampe 14b. Cette partie ou rampe 14b est tout simplement réalisée par un accroissement progressif de la matière des branches 14 depuis l'extrémité 14c de la partie rectiligne 14a jusqu'à l'extrémité 25 de raccordement des branches 14 à l'embase 16. Comme on l'expliquera plus loin en détail, la partie rectiligne 14a permet le coulissement aisé de l'écrou 11 le long des branches 14, tandis que la partie 14b sera infléchie vers l'axe X,X' de l'écrou 11 pour réaliser un auto-freinage de cet écrou, au fur-et-à-mesure que celui-ci approche de l'embase 16 sous l'effet du vissage.

Comme pour le mode de réalisation des figures 6 à 8, les branches 14 sont réunies par une partie 18 en forme d'anse plus ou moins effilée pour permettre l'insertion commode des branches 14, c'est-à-dire du support 13, dans le corps d'écrou 11.

La face inférieure 16a de l'embase 16 du support 13 est munie, de part et d'autre des branches 14, de deux paires de butées ou saillies 19 et 20 qui permettent tant le blocage en rotation de l'écrou 11, comme on l'expliquera plus loin, que le positionnement et l'encliquetage du support 13 dans l'orifice 7 du panneau P. A cet égard, chaque butée 19, 20, comporte une paroi extérieure inclinée 19a, 20a formant rampe et permettant le clippage et la retenue du support 13 dans les bords de l'orifice 7 du panneau.

Comme on le voit mieux sur la figure 4, l'écrou 11 et l'embase 16, suivant le mode de réalisation représentés sont sensiblement rectangulaires, et sont orientés de façon que leurs directions longitudinales respective A-A' et B-B' soient orthogonales.

Le support 13 se composant essentiellement de l'embase 16, des branches en U 14 et des saillies 19 et 20, est réalisé en une seule pièce en matière plastique obtenue par moulage d'un matériau synthétique approprié qui confère bien sûr à ladite pièce certaines qualités d'élasticité. Ainsi, pour monter l'écrou 11 sur le support 13, on insérera la partie effilée 18 dans l'orifice taraudé 15 de l'écrou 11, et l'élasticité des branches 14 permettront à l'écrou de franchir les épaulements 17, étant entendu qu'à ce moment là les branches 14 se positionneront instantanément dans les rainures 12 de l'écrou 11. Celui-ci se trouve alors en position montée sur le support 13 comme montré sur la figure 1, et l'orifice taraudé 15 de l'écrou 11 est en alignement axial avec un orifice 16b pratiqué dans l'embase 16.

On décrira maintenant le montage du dispositif ci-dessus dans l'orifice 7 du panneau P en vue de réaliser un assemblage.

Comme on le voit sur la figure 2, on présente le support 13 de telle manière que l'écrou 11 reposant sur les épaulements 17 puisse passer au travers de l'orifice 7 qui est bien sûr rectangulaire. Dans cette position, les butées 19 et 20 ne peuvent pénétrer dans l'orifice 7 en raison de l'orientation orthogonale de l'écrou 11 et de l'embase 16, comme on l'a expliqué précédemment.

L'écrou rectangulaire 11 ayant franchi l'orifice 7, comme on le voit bien sur la figure 2, il suffit alors de faire effectuer à l'embase 16 un quart de tour pour pouvoir ensuite clipper le support 13 et plus précisément les butées 19 et 20 dans l'orifice 7 du panneau P. L'insertion et le clippage des butées 19 et 20 sont d'ailleurs facilités par des parties chanfreinées 19b et 20b prévues sur lesdites butées.

Le support 13 et son écrou associé sont montrés sur la figure 3 en position montée dans l'orifice 7 du panneau ou de la tôle P, et on peut alors à l'aide de la vis 10, par exemple, fixer une pièce quelconque, telle que par exemple un autre panneau P1, sur le panneau P comme cela est visible sur la figure 5.

Au fur et à mesure du vissage de la vis 10 dans l'écrou 11, celui-ci est guidé et coulisse par ses rainures 12 le long des branches 14. Plus précisément, lorsque l'écrou 11 attaque les rampes 14b des branches 14, ces dernières sont forcées vers l'axe X,X' de l'écrou, ce qui réalise un auto-freinage en raison du supplément de matière entre la périphérie taraudée de l'écrou 11 et le filetage de la vis 10. Et, en fin de vissage, la face supérieure 11a de l'écrou 11 s'applique contre le dessous de la tôle. Comme pour le mode de réalisation précédent, on disposera encore ici d'une surface de portée 11a maximum, par le fait que le support 13 comprend des branches passant en quelque sorte à l'intérieur de l'écrou dans les rainures 12 débouchant dans la périphérie taraudée de cet écrou.

A cet égard, on pourrait très bien, sans sortir du cadre de l'invention, prévoir, à la place des rainures 12, des orifices traversant de part en part l'écrou et situés entre l'orifice taraudé 15 et les côtés de l'écrou 11. Dans ce cas là, l'extrémité des branches 14 ne serait pas réunie par une partie en anse, mais serait tout simplement libre et terminée par un petit crochet élastique susceptible de traverser les deux trous ménagés dans l'écrou pour y être retenu. On notera encore ici que la partie formant rampe 14b des branches 14 a pour fonction supplémentaire d'éviter à l'écrou 11 au repos de s'approcher trop près de l'embase ou plaquette 16, ce qui serait par exemple le cas, si on montait l'écrou dans l'orifice d'une tôle par en dessous, ledit écrou tendant alors par gravité à se plaquer sur l'embase 16, ce qui alors empêcherait le montage quart de tour de l'ensemble embase 16 — écrou 11 dans l'orifice 7 du panneau P.

Il faut encore insister ici sur le fait que non seulement les butées 19 et 20 ont pour rôle de clipper le support 13 dans l'orifice 7, mais elles ont aussi pour fonction d'immobiliser l'écrou en rotation en fin de vissage, puisqu'il s'encastrera nécessairement entre les deux paires de butées 19 et 20.

On a donc réalisé suivant l'invention un dispositif à écrou retenu particulièrement simple et qui présente tous les avantages souhaitables pour ce genre de dispositifs, à savoir notamment une étanchéité parfaite après montage, la suppression des flottements intempestifs de l'écrou dans son support, l'obtention d'une surface de portée maximum de l'écrou sur le panneau, un autofreinage efficace de l'écrou en fin de vissage, et la possibilité pour ce dispositif de s'adapter à une plage importante d'épaisseurs de panneau ou de tôle.

**Revendications**

1. Dispositif de fixation à écrou retenu, du type constitué par un écrou (1, 11) monté de manière coulissante sur un support (3, 13) qui peut être fixé dans l'orifice (7) d'un panneau (P) ou analogue, tel que par exemple une tôle, pour permettre la retenue de l'écrou (1, 11) sur ce panneau (P), caractérisé en ce que ledit support (3, 13) comporte au moins deux branches (4, 14) traversant de part en part le corps d'écrou (1, 11) en passant dans des orifices, rainures ou analogues (2, 12) pratiqués dans ce corps d'écrou (1, 11) suivant sensiblement son axe X,X'.

2. Dispositif suivant la revendication 1, caractérisé en ce que les deux branches précitées (4, 14) passent respectivement dans deux rainures (2, 12) diamétralement opposées et ménagées dans la périphérie de l'orifice taraudé (5, 15) de l'écrou (1, 11) où elles débouchent.

3. Dispositif suivant la revendication 1 ou 2, caractérisé en ce que les deux branches précitées (4) traversant l'écrou (1) constituent les branches d'un support (3) présentant la forme générale d'un U réalisé en un matériau filiforme, tel que par exemple un fil d'acier, l'extrémité libre (6) des deux branches (4) étant retournée vers l'extérieur pour permettre l'accrochage du support (3) portant l'écrou (1) dans l'orifice (7) du panneau P.

4. Dispositif selon la revendication 3, caractérisé en ce que les deux branches (4) du U précité sont au moins en partie déformées (4a) vers l'extérieur du U pour retenir l'écrou sur le support tout en lui permettant de coulisser sur celui-ci.

5. Dispositif selon la revendication 1 ou 2, caractérisé en ce que les deux branches précitées (14) constituent les branches d'un U dont les extrémités libres (25) sont solidaires d'une plaquette, embase ou analogue (16) qui peut être fixée dans l'orifice (7) du panneau P et qui forme avec le U des branches le support précité (13).

6. Dispositif selon la revendication 5, caractérisé en ce que les branches précitées (14) du support (13) comportent un épaulement (17) pour la retenue de l'écrou (11).

7. Dispositif selon la revendication 5 ou 6, caractérisé en ce qu'entre l'épaulement (17) et l'embase (16), les branches précitées (14) sont constituées par une partie sensiblement rectiligne (14a) à laquelle fait suite une partie formant rampe (14b).

8. Dispositif selon l'une des revendications 5 à 7, caractérisé en ce que, de part et d'autre des branches (14), l'embase (16) du support (13) est munie de butées (19, 20) permettant le blocage en rotation de l'écrou (11) ainsi que le maintien du support (13) dans l'orifice (7) du panneau P.

9. Dispositif selon la revendication 8, caractérisé en ce que les butées précitées sont constituées par deux paires de plots, saillies ou analogues comportant respectivement des parois formant rampes (19a, 20a) pour assurer le clippage du support (13) dans l'orifice (7) du panneau P.

10. Dispositif selon l'une des revendications 5 à 9, caractérisé en ce que l'écrou (11) et l'embase (16) du support (13) sont sensiblement rectangulaires et sont orientés de façon que leurs directions longitudinales respectives soient orthogonales.

11. Dispositif selon l'une des revendications 1 à 8, caractérisé en ce que les branches précitées (4, 14) sont réunies par une partie en forme d'anse effilée permettant l'introduction desdites branches dans l'orifice taraudé (5, 15) de l'écrou (1, 11).

12. Dispositif selon la revendication 1 ou 2, ou l'une des revendications 5 à 11, caractérisé en ce que le support précité (13) est réalisé en une seule pièce par moulage d'une matière plastique appropriée.

13. Assemblage par vis et écrou utilisant un dispositif selon l'une quelconque des revendications précédentes.

**Claims**

1. Fastening device with a retained nut, of the type constituted by a nut (1, 11) slidingly mounted on a support (3, 13) which can be attached in the orifice (7) of a panel (P) or the like, such as for example a metal sheet, to allow the nut (1, 11) to be retained on the panel (P), characterized in that the said support (3, 13) has at least two legs (4, 14) extending right through the nut body (1, 11) by passing through orifices, slots or the like (2, 12) provided in the said nut body (1, 11) substantially along its axis X, X'.

2. A device according to claim 1, characterized in that the said two legs (4, 14) extend through two diametrically opposite slots (2, 12), respectively, provided in the periphery of the tapped orifice (5, 15) of the nut (1, 11) into which they open.

3. A device according to claim 1 or 2, characterized in that the said two legs (4) extending right through the nut (1) constitute the legs of a support (3) in the general shape of a U made of a filiform material, such as for example a steel wire, the free end (6) of the two legs (4) being turned over outwardly to allow the support (3) carrying the nut (1) to engage the orifice (7) of the panel P.

4. A device according to claim 3, characterized in that the two legs (4) of the said U-shaped support are at least partially deformed (4a) outwardly of the U to retain the nut on the support while at the same time allowing it to slide on the latter.

5. A device according to claim 1 or 2, characterized in that the said two legs (14) constitute the legs of a U the free ends (25) of which are integral with a plate, base or the like (16) which can be attached in the orifice (7) of the panel P and which forms with the U the legs of the aforesaid support (13).

6. A device according to claim 5, characterized in that the said legs (14) of the support (13) are provided with a shoulder (17) for retaining the nut (1).

7. A device according to claim 5 or 6, characterized in that between the shoulder (17) and the base (16), the said legs (14) are constituted by a substantially rectilinear portion (14a) which is followed by a skew portion (14b).

8. A device according to one of claims 5 to 7, characterized in that, on either side of the legs (14), the base (16) of the support (13) is provided with abutments (19, 20) allowing the locking in rotation of the nut (11) as well as the maintaining of the support (13) in the orifice (7) of the panel P.

9. A device according to claim 8, characterized in that the aforesaid abutments are constituted by two pairs of pins, projections or the like, having inclined walls (19a, 20a), respectively, to ensure the clipping of the support (13) in the orifice (7) of the panel P.

10. A device according to one of claims 5 to 9, characterized in that the nut (11) and the base (16) of the support (13) are substantially rectangular and are arranged so that their respective longitudinal directions are orthogonal.

11. A device according to one of claims 1 to 8, characterized in that the aforesaid legs (4, 14) are connected by a portion in the form of a tapering basket-handle allowing the introduction of the said legs into the tapped orifice (5, 15) of the nut (1, 11).

12. A device according to claim 1 or 2, or to one of claims 5 to 11, characterized in that the said support (13) consists of an integral moulding obtained from an appropriate plastics material.

13. A screw-and-nut assembly using a device according to any one of the foregoing claims.

## Patentansprüche

1. Befestigungsvorrichtung mit zurückgehaltener Mutter, derjenigen Bauart, die aus einer Mutter (1, 11) besteht, welche gleitbar an einer Halterung (3, 13) angeordnet ist, welche in der Offnung (7) einer Tafel (P) oder dergleichen, wie z. B. eines Bleches befestigbar ist, um das Festhalten der Mutter (1, 11) an dieser Tafel (P) zu ermöglichen, dadurch gekennzeichnet, dass die besagte Halterung (3, 13) wenigstens zwei Schenkel (4, 14) aufweist, welche den Körper der Mutter (1,11) vollständig durchsetzen indem sie in, in diesem Mutterkörper (1, 11) etwa entlang seiner Mittellinie X, X' angeordneten Offnungen, Nuten oder dergleichen (2, 12) geführt werden.

2. Vorrichtung nach Anspruch 1, dadurch gekennzeichnet, dass die beiden vorgenannten Schenkel (4, 14) jeweils in zwei diametral entgegengesetzten und in dem Umfang des Gewindeloches (5, 15) der Mutter (1, 11) geführt sind, wo sie einmünden.

3. Vorrichtung nach Anspruch 1 oder 2, dadurch gekennzeichnet, dass die beiden die Mutter (1) durchsetzenden vorgenannten Schenkel (4) die Schenkel eines aus einem fadenförmigen Werkstoff wie z. B. einem Stahldraht gefertigten U's bilden, wobei das freie Ende (6) der beiden Schenkel (4) nach aussen umgeknickt ist, um das Einhängen des die Mutter (1) tragenden Halters (3) in die Offnung (7) der Tafel P zu ermöglichen.

4. Vorrichtung nach Anspruch 3, dadurch gekennzeichnet, dass die beiden Schenkel (4) des vorgenannten U's mindestens zum Teil nach Aussen des U's verformt (4a) sind, um die Mutter an dem Halter zurückzuhalten und ihr jedoch zu gestatten, an diesem zu gleiten.

5. Vorrichtung nach Anspruch 1 oder 2, dadurch gekennzeichnet, dass die beiden vorgenannten Schenkel (14) die Schenkel eines U's bilden, dessen freie Enden (25) fest mit einem Plättchen, einem Ansatz oder dergleichen (16) verbunden sind, welches bzw. welcher in der Offnung (7) der Tafel P befestigbar ist und das bzw. der mit dem U der Schenkel die vorgenannte Halterung (13) bildet.

6. Vorrichtung nach Anspruch 5, dadurch gekennzeichnet, dass die vorgenannten Schenkel (14) der Halterung (13) eine Schulter (17) zum Zurückhalten der Mutter (11) aufweisen.

7. Vorrichtung nach Anspruch 5 oder 6, dadurch gekennzeichnet, dass zwischen der Schulter (17) und dem Ansatz (16) die vorgenannten Schenkel (14) durch einen etwa geradlinigen Teil (14a) gebildet werden, an welchen ein rampenförmiger Teil (14b) angeschlossen ist.

8. Vorrichtung nach einem der Ansprüche 5 bis 7, dadurch gekennzeichnet, dass beiderseits der Schenkel (14) der Ansatz (16) der Halterung (13) mit die Hemmung der Mutter (11) in Drehrichtung sowie das Festhalten der Halterung (13) in der Offung (7) der Tafel P ermöglichenden Anschlägen (19, 20) versehen ist.

9. Vorrichtung nach Anspruch 8, dadurch gekennzeichnet, dass die vorgenannten Anschläge durch ein paar Knaggen, Vorsprüngen oder dergleichen gebildet sind, welche jeweils rampenförmige Wandungen (19a, 20a) aufweisen, um das Einklemmen der Halterung (13) in die Offnung (7) der Tafel P zu gewährleisten.

10. Vorrichtung nach einem der Ansprüche 5 bis 9, dadurch gekennzeichnet, dass die Mutter (11) und der Ansatz (16) der Halterung (13) im wesentlichen rechteckig und derart ausgerichtet sind, dass ihre jeweiligen Längsrichtungen rechtwinklig zueinander sind.

11. Vorrichtung nach einem der Ansprüche 1 bis 8, dadurch gekennzeichnet, dass die vorgenannten Schenkel (4, 14) durch einen sich verjüngenden, das Einführen der besagten Schenkel in das Gewindeloch (5, 15) der Mutter (1, 11) ermöglichenden bügelförmigen Teil vereinigt sind.

12. Vorrichtung nach Anspruch 1 oder 2 oder einem der Ansprüche 5 bis 11, dadurch gekennzeichnet, dass die vorgenannte Halterung (13) einstückig durch Formgiessen eines geeigneten Kunststoffes hergestellt wird.

13. Zusammenbau durch Schraube und Mutter unter Verwendung einer Vorrichtung nach irgendeinem der vorangehenden Ansprüche.

Fig. 1

Fig. 4

Fig. 2

Fig. 3

Fig. 5

0 077 695

**Fig. 6**

**Fig. 7**

**Fig. 8**

3